# EUROPEAN PATENT APPLICATION

(11) **EP 1 452 979 A2**
(43) Date of publication of application: **01.09.2004**
(21) Application number: 04001816.0
(22) Date of filing: 28.01.2004
(51) Int. Cl.: G06F 17/30

(54) **Multi-directional display and navigation of hierarchical data and optimization of display area comsumption**

(30) Priority: 27.02.2003 US 376404
(71) Applicant: MICROSOFT CORPORATION, Redmond, Washington 98052-6399 (US)
(72) Inventor: Burdick, Brian, Bellevue, Washington 98005 (US); Najm, Tarek, Kirkland, Washington 98034 (US)
(74) Representative: Grünecker, Kinkeldey, Stockmair & Schwanhäusser Anwaltssozietät

(57) **Abstract**

Displaying data in a user interface for navigation by a user and optimization of display area consumption. The data is associated with a plurality of nodes organized according to a hierarchy having a plurality of levels. Each of the nodes has a corresponding identifier. The invention includes arranging the identifiers for each of the nodes to display one or more of the levels in a visual representation of the hierarchy in one of a plurality of directions relative to a higher one of the levels. The invention also includes dynamically expanding and pivoting levels in a display direction in the visual representation of the hierarchy in response to user input.

## Description

### TECHNICAL FIELD

The present invention relates to the field of data display and navigation. In particular, this invention relates to displaying large data sets in a multi-directional hierarchy for navigation by a user while optimizing use of the display area.

### BACKGROUND OF THE INVENTION

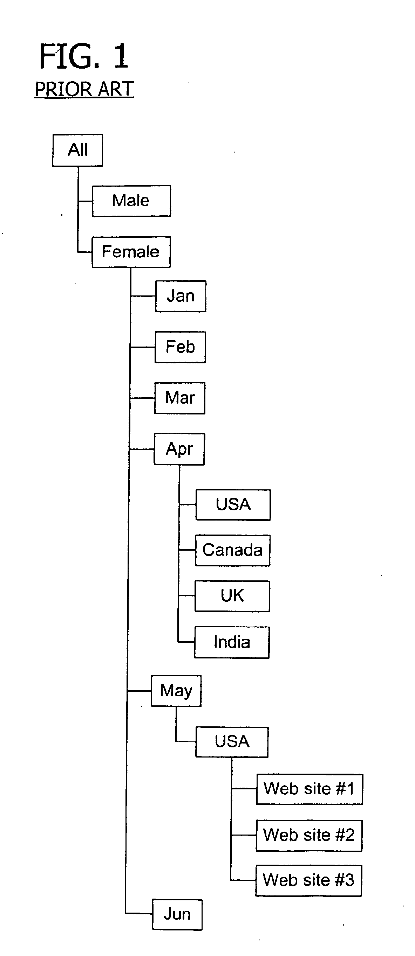

Large amounts of data (e.g., up to and exceeding a terabyte of data) stored in a database can be difficult to display and navigate. Existing systems display either a vertical or a horizontal tree structure having nodes organized in levels. One other known structure for displaying data is an organization chart. As illustrated in FIG. 1, an exemplary vertical tree structure expands each level of data in a vertical fashion with minimal horizontal movement. Similarly, with the horizontal tree structure, each level expands in primarily horizontal fashion with minimal vertical movement. Unfortunately, the vertical and horizontal tree structures fail to effectively use the display area as there is significant un-used display area. As such, the vertical and horizontal tree structures display only a relatively small portion of the data in the display area at any one time. When working with large amounts of data, the user must scroll the display area to view additional data. In an organization chart, the tree structure generally starts in the top-center of the display area and then expands downwards and outwards in a single direction relative to the next higher level in the hierarchy by centering all of the nodes on each level. This kind of tree waste display area in either top comer and lacks the ability for the user to re-organize the levels to effectively display relevant data.

Such existing systems fail to provide multi-directional display of levels in a hierarchy, dynamic adjustment of level display direction, and expansion of more than one node in any one level. As such, these existing systems fail to optimize the available display area limiting the amount of data displayed to a user.

For these reasons, a system for displaying data in a multi-directional hierarchy for navigation by a user and optimization of consumption of the display area is desired to address one or more of these and other disadvantages.

### SUMMARY OF THE INVENTION

The invention includes displaying data in a user interface for navigation by a user and optimization of consumption or use of the display area. The data is associated with a plurality of nodes organized according to a hierarchy having a plurality of levels where each of the nodes has an identifier. In particular, a computer system executes software routines of the invention to arrange the identifier for each of the nodes to display one or more of the levels in one of a plurality of directions relative to a higher one of the levels (e.g., substantially horizontal or substantially vertical) in a visual representation of the hierarchy.

The multi-directional display may be implemented in various embodiments including, but not limited to, application programs (e.g., a file manager) and web services (e.g., in a decision support system) to present hierarchical data and effectively maximize display area. The invention includes interactive re-organization of the displayed data. For example, the invention software provides functionality to the user to dynamically select and modify (e.g., expand and pivot) the direction of each level.

In accordance with one aspect of the invention, a method presents data in a user interface for navigation by a user. The data is associated with a plurality of nodes and is stored in a memory area. The nodes are organized according to a hierarchy having a plurality of levels. Each of the nodes is identified by an identifier associated therewith. The method includes arranging the identifiers to display the nodes of one or more of the levels in a visual representation of the hierarchy. The identifiers are arranged to display one or more of the nodes of one level in a first direction relative to a higher level in the hierarchy and to display one or more of the nodes of at least one other level in a second direction relative to a higher level in the hierarchy. The first direction is different than the second direction. The method also includes displaying to the user the visual representation of the hierarchy having the arranged identifiers for the nodes.

In accordance with another aspect of the invention, a method displays data in a computer system that has a user interface including a display and is responsive to a user interface selection device. The data is associated with a plurality of nodes and is stored in a memory area. The nodes are organized according to a hierarchy having a plurality of levels. The nodes are further identified by identifiers corresponding thereto. The method includes arranging the identifiers for the nodes to display one or more of the levels in a visual representation of the hierarchy on the display. Each of the displayed levels is displayed on the display by the identifiers arranged in one of a plurality of directions relative to a higher one of the levels. The method also includes receiving an activation request from a user to expand the visual representation of the hierarchy. The activation request corresponds to at least one of the identifiers selected by the user via the user interface selection device. At least one of the identifiers is associated with a node of a specific one of the levels. The request further includes an operative direction associated with the at least one of the identifiers. The method also includes arranging the identifiers associated with the nodes in one of the levels lower than the specific one of the levels for display in the operative direction in the visual representation of the hierarchy on the display.

In accordance with yet another aspect of the invention, a computer-readable medium has computer-executable components for presenting data in a user interface for navigation by a user. The data is associated with a plurality of nodes and is stored in a memory area. The nodes are organized according to a hierarchy having a plurality of levels. Each of the nodes is identified by an identifier associated therewith. The components include a user interface component for arranging the identifiers to display the nodes of one or more of the levels in a visual representation of the hierarchy. Each of the identifiers associated with the nodes of the displayed levels is displayed in one of a plurality of directions relative to a higher one of the levels.

In accordance with still another aspect of the invention, a data reporting system presents data in a user interface for navigation by a user. The data is associated with a plurality of nodes and is stored in a memory area. The nodes are organized according to a hierarchy having a plurality of levels. Each of the nodes is identified by an identifier associated therewith. The system includes means for arranging the identifiers to display the nodes of one or more of the levels in a visual representation of the hierarchy. The identifiers are arranged to display one or more of the nodes of one level in a first direction relative to a higher level in the hierarchy and to display one or more of the nodes of at least one other level in a second direction relative to a higher level in the hierarchy. The first direction is different than the second direction. The system also includes means for displaying to the user the visual representation of the hierarchy having the arranged identifiers for each of the nodes.

Alternatively, the invention may comprise various other methods and apparatuses.

Other features will be in part apparent and in part pointed out hereinafter.

### BRIEF DESCRIPTION OF THE DRAWINGS

FIG. 1 is a prior art embodiment of a vertical tree structure.

FIG. 2 is an exemplary block diagram illustrating a hierarchy with levels displayed in multiple directions according to the invention.

FIG. 3 is an exemplary flow chart illustrating operation of software according to the invention to arrange and display the nodes in the multi-directional hierarchy.

FIG. 4 is a block diagram illustrating an exemplary computer-readable medium on which software according to the invention may be stored.

FIG. 5 is a block diagram illustrating one example of a suitable computing system environment in which the invention may be implemented.

FIG. 6 is a screen shot of an exemplary embodiment of the invention illustrating a multi-directional hierarchy.

FIG. 7 is a screen shot of an embodiment of the invention illustrating a root node and its exemplary nodal data.

Corresponding reference characters indicate corresponding parts throughout the drawings.

### DETAILED DESCRIPTION OF THE INVENTION

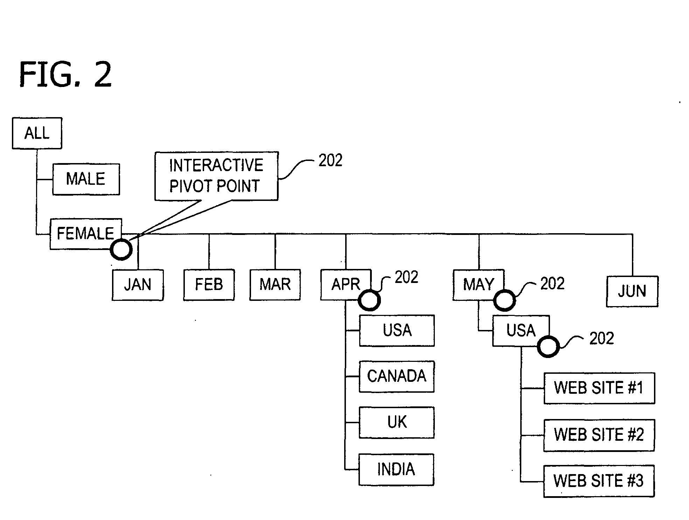

The invention includes software executing on a server computer or on a client computer to display data in a user interface for navigation by a user of the client computer (see FIG. 2). The data is associated with a plurality of nodes and is stored in a memory area such as a database (e.g., a non-relational database). The nodes are organized according to a hierarchy (e.g., a tree structure) having a plurality of levels. Each of the nodes has an identifier associated with it (e.g., a label or icon). Software according to the invention arranges the identifier for each of the nodes to display one or more of the levels in a visual representation of the hierarchy. Each of the levels is displayed in one of a plurality of directions relative to a higher one of the levels.

The invention provides platform-independent hierarchical display and data navigation software. In one embodiment, the invention is a control implemented as a hypertext markup language (HTML) component (HTC) for use by a web browser. Exemplary software according to the invention embodies the arranged identifiers in an HTML document for use by the client computer. The software routines of the invention operate with any data stored in the memory area corresponding to nodes organized as levels in the hierarchy. Each node in the hierarchy has an identifier (e.g., a label) corresponding to that node.

Referring to FIG. 2, an exemplary block diagram illustrates a hierarchy with levels displayed in multiple directions according to the invention. In the embodiment of FIG. 2, display of each of the levels alternates between directions that are vertical and horizontal relative to a higher level in the hierarchy. For example, the nodes identified by the labels "Jan," "Feb," "Mar," "Apr," "May," and "Jun" are displayed horizontally relative to the node in the next higher level identified by the label "Female." Similarly, the nodes identified by the labels "USA," "Canada," "UK," and "India" are displayed vertically relative to the node in the next higher level identified by the label "Apr." With a root of the hierarchy at a top left comer of a display area, each level subsequently lower than the root is displayed in a downward-right motion to a bottom right comer of the display area. In another embodiment, a node inherits a display direction from a node in a higher level. For example, a child node inherits the display direction of a parent node.

Additionally, the invention includes functionality allowing a user to interactively or dynamically pivot any level to display in another direction. For example, an interactive pivot point 202 illustrated in FIG. 2 indicate locations that the user may select to dynamically display the nodes in the next lower level in a particular direction. That is, the software dynamically arranges the identifier for each of the nodes according to user input to display one or more of the levels in the visual representation of the hierarchy. Those skilled in the art will note that other directions for display of levels of the hierarchy exist and are within the scope of the invention. In addition, it is contemplated by the inventors that the invention may be implemented in various forms such as an application program executing on a client or as a web service accessible via a browser from the client.

The software routines of the invention are applicable for navigating various types of hierarchical data. The invention is operable with any memory area in which the data is organized as a hierarchy or otherwise categorized into different levels. In addition, the software routines may be executed by a computing device to analyze web usage data, to select reports, or to browse the Internet with a mobile device such as a laptop, a personal data assistant (PDA), or a cellular telephone. The software routines of the invention provide client side error trapping by including a validation routine to determine if the current state of the HTC is valid. In addition, the invention software is extensible for various scenarios in that a software developer or other user may designate an initial set of nodes, levels, and corresponding display directions as a default selection (e.g., stored in a file accessed on initialization of the software).

In general, the visual representation of the hierarchy includes data associated with each node. For example, in a file manager application program, the nodal data may include file names. In other examples, nodal data includes, but is not limited to, numeric data and a histogram representing a percentage of numeric data for a specific node versus numeric data for a node in a higher level. The histogram represents an absolute comparison in that the numeric data for a specific node is compared with numeric data in a root node. Alternatively or in addition, the histogram represents a relative comparison in that the numeric data for a specific node is compared with numeric data for a node in an immediately higher level. The histograms are user-configurable. In one embodiment, the nodal data is stored in an extensible markup language document or a dynamic hypertext markup language document.

In one embodiment of the invention, each of the identifiers is represented by a rectangle with an aspect ratio corresponding to an aspect ratio associated with a display area in the visual representation of the hierarchy. That is, each node is shaped as a rectangle with the long sides of the rectangle placed horizontally (e.g., a 4:3 aspect ratio) to maximize use of the display area. Because the display is shaped as a primarily horizontal rectangle (e.g., a 4:3 aspect ratio), such a nodal shape further conserves screen display area. An "autofit" option enabled by the user automatically scales (e.g., larger or smaller) all the displayed nodes to fit into the display area without scrolling. This means that the hierarchy will be displayed with very large-sized nodes when there are only a few nodes. The hierarchy becomes progressively smaller as more levels and nodes are expanded.

### Operation

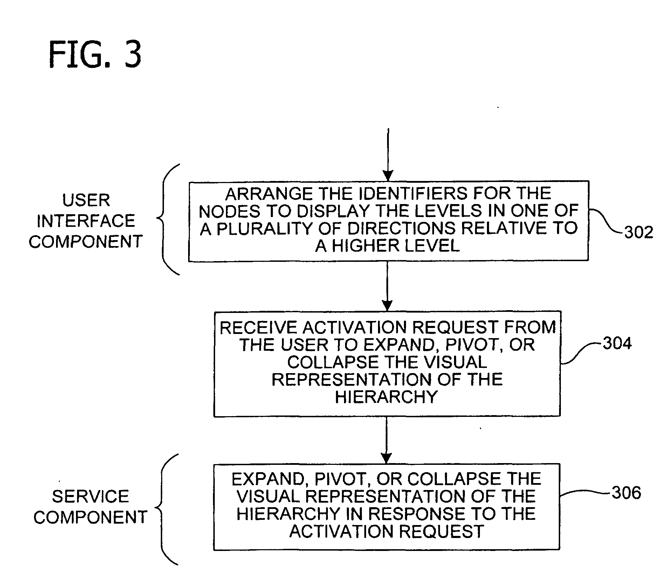

Referring next to FIG. 3, an exemplary flow chart illustrates operation of software according to the invention to arrange and present or display the nodes in the multi-directional hierarchy. When executed, the exemplary software arranges the identifier for each of the nodes to display one or more of the levels in the visual representation of the hierarchy at 302. Each of the levels is displayed in one of a plurality of directions relative to a higher one of the levels. That is, the identifiers are arranged to display one or more of the nodes of one level in a first direction relative to a higher level in the hierarchy. In addition, the identifiers are arranged to display one or more of the nodes of other level in a second direction relative to a higher level in the hierarchy. The first direction is different than said second direction. For example, each of the levels is displayed in either a substantially horizontal or a substantially vertical direction relative to a higher one of the levels. In one embodiment, a substantially horizontal direction occurs along any axis that is approximately forty-five degrees on either side of a horizontal axis. Similarly, a substantially vertical direction occurs along any axis that is approximately forty-five degrees on either side of a vertical axis. In one form, each level is displayed in a direction that is generally different than the direction of a higher one of the levels. For example, the levels may be displayed in a "stair-step" pattern (see below).

In an embodiment in which the software executes on the client computer, the software further displays to the user the visual representation of the hierarchy. In an embodiment in which the software does not have access to the rendering routines on the client computer (e.g., the software executes on the server computer), the software delivers the visual representation of the hierarchy to the user for display.

The client computer may include a display and a user interface selection device. Via the user interface selection device, the user sends requests to the invention software to expand, collapse, or pivot the visual representation of the hierarchy. In response to receiving the request to expand, collapse, or pivot the visual representation of the hierarchy at 304, the invention software performs the requested expansion, collapse, or pivoting at 306. For example, the software receives an activation request from a user to expand the visual representation of the hierarchy. The activation request includes at least one of the identifiers selected by the user via the user interface selection device. The selected identifier is associated with a node of a specific one of the levels. The activation request further includes an operative direction associated with the selected identifier. In response to the received activation request, the software arranges the identifiers associated with the nodes in one of the levels lower than the specific one of the levels for display in the operative direction in the visual representation of the hierarchy on the display.

Referring again to the example of FIG. 2, a sample activation request to expand the displayed hierarchy may include the label "Apr" as the identifier and specify vertical as the operative direction. In response to this activation request, the software expands the hierarchy to display the nodes in the level lower than the level associated with the node identified by "Apr." The nodes are displayed in a vertical direction relative to the node identified by "Apr." In this example, the displayed nodes include "USA," "Canada," "UK," and "India."

The software may receive an activation request from a user to pivot or otherwise alter the direction of a displayed level in the visual representation of the hierarchy. The activation request includes at least one of the identifiers selected by the user via the user interface selection device. The selected identifier is associated with a node of a specific one of the levels. The activation request further includes an operative direction associated with the selected identifier. In response to the received activation request, the software arranges the identifiers associated with the nodes in one of the levels lower than the specific one of the levels for display in the operative direction in the visual representation of the hierarchy on the display.

Referring again to the example of FIG. 2, a sample activation request to pivot the displayed hierarchy may include the label "Apr" as the identifier and specify horizontal as the operative direction. In response to this activation request, the software pivots the hierarchy to display the nodes in the level lower than the level associated with the node identified by "Apr." The nodes are displayed in a horizontal direction relative to the node identified by "Apr" (not shown). In this example, the horizontally displayed nodes include "USA," "Canada," "UK," and "India."

Interactive pivoting allows the user to interactively arrange meaningful information in the most prominent position in the display area and arrange less relevant information elsewhere (e.g., obtainable via scrolling). For example, a more efficient use of the display area may occur when more levels of the hierarchy are displayed in one direction than another. Interactive pivoting allows the user to make such a determination and alter the expansion direction of each level accordingly. In one embodiment, an algorithm automatically pivots the expansion direction of each level based on the number of nodes in each level and the aspect ratio of the display area (e.g., a window) to maximize use of the display area. For example, the aspect ratio of the display may be 4:3, 16:9, or a custom aspect ratio associated with such devices as a personal digital assistant or a mobile telephone. The algorithm adjusts the display of the hierarchy to optimize consumption or use of the particular display area (e.g., a window in the display, or the entire display). It is contemplated by the inventors that one skilled in the art could readily design a basic form of such an algorithm.

The software may receive an activation request to collapse the visual representation of the hierarchy. Such an activation request includes at least one of the displayed identifiers selected by the user via the user interface selection device. The selected identifier is associated with a node of a specific one of the levels. In response to the received request, the software collapses the specific one of the levels in the visual representation of the hierarchy on the display. Referring to the example of FIG. 2, a sample activation request to collapse the displayed hierarchy may include the identifier "Apr." In response to this activation request, the software collapses the displayed hierarchy by removing the nodes identified by "USA," "Canada," "UK," and "India" from the displayed hierarchy.

In other embodiments, the activation request may constitute various other operations or manipulations of the hierarchy resulting in the software arranging the displayed identifiers in accordance with the activation request. For example, the activation request includes, but is not limited to, a request to scale the displayed visual representation of the hierarchy to fit the available display area, to display only a certain number of nodes and provide scroll bars to view the remaining nodes, to add or delete nodes, to navigate through the drill path (e.g., to step forward and backward through each activation request from the user), to combine nodes from one level into one node, to expand or contract multiple nodes at once, and to zoom in or out of a portion of the displayed hierarchy. For example, the user may zoom in on any particular level up to 200% of its original size or zoom out of a particularly large hierarchy down to 10% of it's original size.

Virtual grouping includes combining nodes from one level into one node. That is, the user may create a virtual group by combining existing nodes in one level into a custom group node. For example, the user may group the nodes identified by "Washington," "Oregon," and "California" into a new group identified by "West Coast."

One or more computer-readable media have computer-executable instructions for performing the method illustrated in FIG. 3. For example, the computer-executable instructions may be stored on the computer-readable media as an application program or as an applet.

### Components

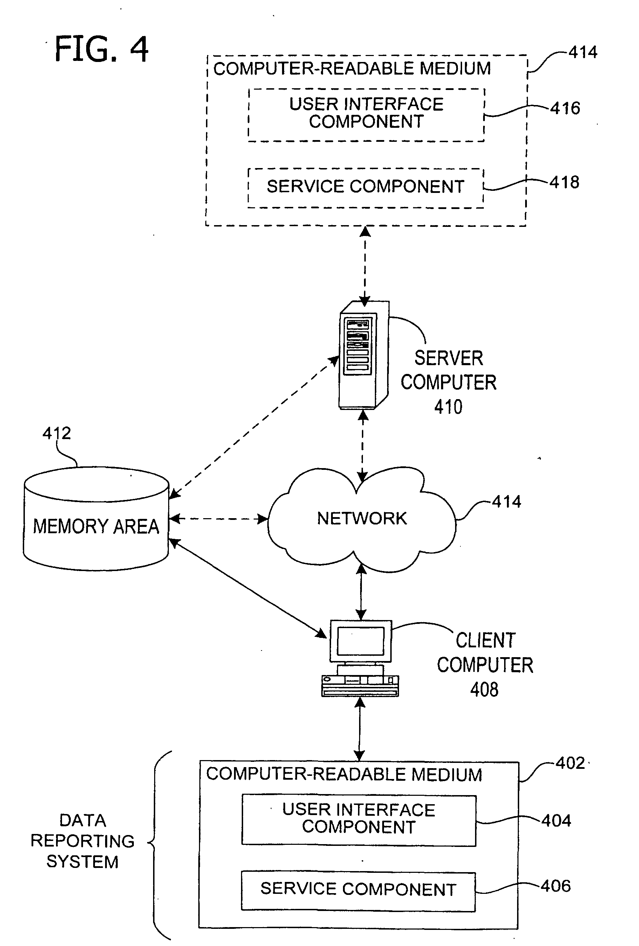

Referring next to FIG. 4, a block diagram illustrates an exemplary computer-readable medium 402 on which software according to the invention may be stored. In one form, the computer-readable medium 402 has computer-executable components to implement the invention. The computer-executable components operate to display and manipulate data. The computer-readable medium stores a user interface component 404 for arranging the identifier for each of the nodes to display one or more of the levels in a visual representation of the hierarchy. Each of the levels is displayed in one of a plurality of directions relative to a higher one of the levels. For example, the user interface component 404 arranges the identifier for each of the nodes to display one or more of the levels in either a horizontal or vertical direction relative to a higher one of the levels. The computer-readable medium 402 also includes a service component 406 for expanding, collapsing, or pivoting the visual representation of the hierarchy in response to one or more requests from the user to expand, collapse, or pivot, respectively, the visual representation of the hierarchy with the identifier arranged by the user interface component 404. Those skilled in the art will note that the components 404, 406 illustrated in FIG. 4 are merely exemplary. That is, the functionality of the invention may be implemented and embodied in various other components not specifically described herein. It is contemplated by the inventors that other such embodiments are within the scope of the invention. The components 404, 406 stored on the computer-readable medium 402 may execute exclusively or non-exclusively on either a client computer 408 or a server computer 410.

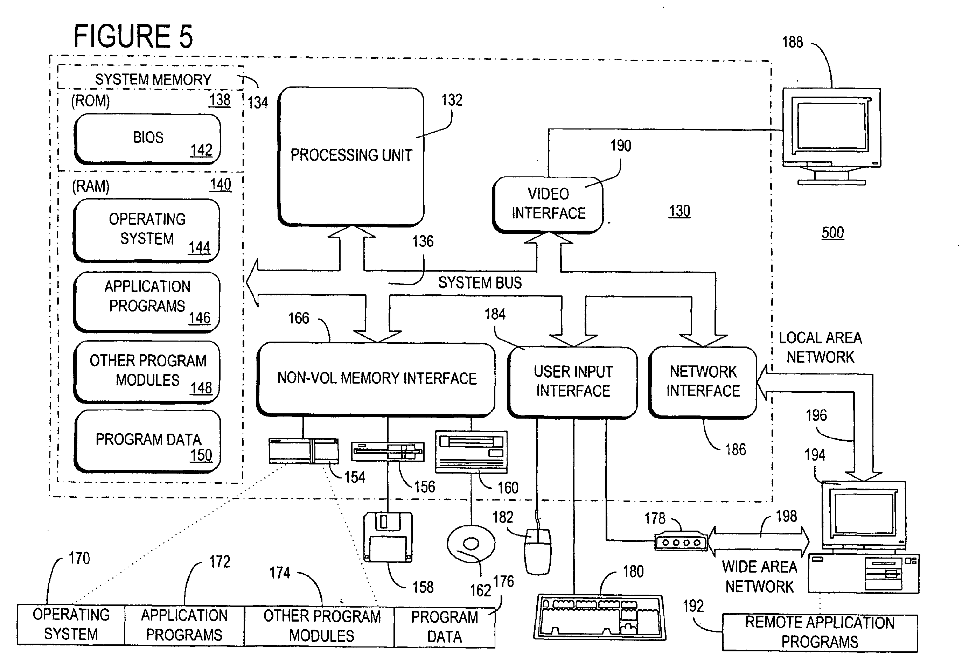

In an embodiment in which the invention software executes on the client computer 408, the data is stored in a memory area 412 such as a database accessible by the client computer 408. One example in which the invention is particularly useful is in the management of web usage, or "click" data, which often involves well in excess of a terabyte of data for relatively large networks of Internet services. In an embodiment in which the invention software executes on the server computer 410, the memory area 412 is accessible by the server computer 410. In such an embodiment, the server computer 410 has access to a computer-readable medium 414 storing the user interface component 416 and the service component 418. The memory area 412 may also be accessible by the client computer 408 and the server computer 410 via a network. In general, the memory area 412 is any memory as described with reference to FIG. 5.

### Implementation

In a browser embodiment (e.g., a web service embodiment), the invention software is implemented as an HTC with a well-formed object model that is self-contained and independent. The invention software is lightweight in that it is downloaded as a script file. However, after instantiation, the invention software operates like a binary control while not having any of the security problems associated with a binary control (such as an ACTIVE X control). In one embodiment, the invention software may be implemented in JAVASCRIPT using HTML component-based object modeling to define self-contained controls. The invention software is generated using standard dynamic HTML known to those skilled in the art. In this embodiment, the user does not need to separately install any software on the client computer.

Alternatively, the invention may be implemented as an application program or within an application program. For example, the invention may be implemented using one or more applets written in JAVA. In this alternative embodiment, the applets are downloaded to and executed by the client computer. In other embodiments, the invention is implemented with JAVASCRIPT or with an object-oriented programming language.

Those skilled in the art will note that the method illustrated in FIG. 3 may be implemented as computer-executable instructions on one or more computer-readable media (e.g., computer-readable medium 402) executed by or combined with various hardware components, software components, or both within the scope of the invention. For example, the invention software may be downloaded as an HTML component, an applet written in JAVA or JAVASCRIPT, or as a plug-in for a browser. Further, a browser on a mobile computing device such as a laptop, a cellular telephone, or a personal digital assistant may execute the invention software.

In one embodiment, the invention is implemented in a data reporting system such as a customer intelligence data mine that transforms raw user data into holistic user profiles stored, for example, in an on-line analytical processing database. With such a data reporting system, the user generates reports about users across multiple web services or application programs and about their characteristics. The reports include user profile data including age, gender, language, location, client software settings, site level usage and lifetime usage.

The data reporting system includes means for arranging the identifiers to display the nodes of one or more of the levels in the visual representation of the hierarchy. The data reporting system further includes means for displaying to the user the visual representation of the hierarchy having the arranged identifiers for each of the nodes. The data reporting system further includes means for receiving an activation request from a user to expand or pivot the visual representation of the hierarchy. The data reporting system further includes means for arranging the identifiers to display the nodes of a lower level relative to the specific one of the levels in the visual representation of the hierarchy. The identifiers are arranged to display the nodes of the lower level in the operative direction relative to a higher level in the hierarchy to expand the visual representation of the hierarchy in response to the received activation request. The data reporting system further includes means for arranging the identifiers to display the nodes of the specific one of the levels in the visual representation of the hierarchy in the operative direction relative to a higher level in the hierarchy to pivot the visual representation of the hierarchy in response to the received activation request. The data reporting system further includes means for receiving an activation request from a user to collapse the visual representation of the hierarchy. The data reporting system further includes means for arranging the identifiers to collapse the specific one of the levels in the visual representation of the hierarchy in response to the received activation request. Software according to the invention and all its possible functionality constitute these exemplary means. In one example, the means for arranging the identifiers to display the nodes of one or more of the levels in the visual representation of the hierarchy includes a software component. The software component automatically scales a size of each of the arranged identifiers to fit a display area of the user interface without scrolling. Further, the examples described above and examples described elsewhere herein constitute these exemplary means.

### Exemplary Operating Environment

FIG. 5 shows one example of a general purpose computing device in the form of a computer 130. In one embodiment of the invention, a computer such as the computer 130 is suitable for use in the other figures illustrated and described herein. Computer 130 has one or more processors or processing units 132 and a system memory 134. In the illustrated embodiment, a system bus 136 couples various system components including the system memory 134 to the processors 132. The bus 136 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

The computer 130 typically has at least some form of computer readable media. Computer readable media, which include both volatile and nonvolatile media, removable and non-removable media, may be any available medium that can be accessed by computer 130. By way of example and not limitation, computer readable media comprise computer storage media and communication media. Computer storage media include volatile and nonvolatile, removable and non-removable media implemented in any method or technology for storage of information such as computer readable instructions, data structures, program modules or other data. For example, computer storage media include RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium that can be used to store the desired information and that can be accessed by computer 130. Communication media typically embody computer readable instructions, data structures, program modules, or other data in a modulated data signal such as a carrier wave or other transport mechanism and include any information delivery media. Those skilled in the art are familiar with the modulated data signal, which has one or more of its characteristics set or changed in such a manner as to encode information in the signal. Wired media, such as a wired network or direct-wired connection, and wireless media, such as acoustic, RF, infrared, and other wireless media, are examples of communication media. Combinations of the any of the above are also included within the scope of computer readable media.

The system memory 134 includes computer storage media in the form of removable and/or non-removable, volatile and/or nonvolatile memory. In the illustrated embodiment, system memory 134 includes read only memory (ROM) 138 and random access memory (RAM) 140. A basic input/output system 142 (BIOS), containing the basic routines that help to transfer information between elements within computer 130, such as during start-up, is typically stored in ROM 138. RAM 140 typically contains data and/or program modules that are immediately accessible to and/or presently being operated on by processing unit 132. By way of example, and not limitation, FIG. 5 illustrates operating system 144, application programs 146, other program modules 148, and program data 150.

The computer 130 may also include other removable/non-removable, volatile/nonvolatile computer storage media. For example, FIG. 5 illustrates a hard disk drive 154 that reads from or writes to non-removable, nonvolatile magnetic media. FIG. 5 also shows a magnetic disk drive 156 that reads from or writes to a removable, nonvolatile magnetic disk 158, and an optical disk drive 160 that reads from or writes to a removable, nonvolatile optical disk 162 such as a CD-ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 154, and magnetic disk drive 156 and optical disk drive 160 are typically connected to the system bus 136 by a non-volatile memory interface, such as interface 166.

The drives or other mass storage devices and their associated computer storage media discussed above and illustrated in FIG. 5, provide storage of computer readable instructions, data structures, program modules and other data for the computer 130. In FIG. 5, for example, hard disk drive 154 is illustrated as storing operating system 170, application programs 172, other program modules 174, and program data 176. Note that these components can either be the same as or different from operating system 144, application programs 146, other program modules 148, and program data 150. Operating system 170, application programs 172, other program modules 174, and program data 176 are given different numbers here to illustrate that, at a minimum, they are different copies.

A user may enter commands and information into computer 130 through input devices or user interface selection devices such as a keyboard 180 and a pointing device 182 (e.g., a mouse, trackball, pen, or touch pad). Other input devices (not shown) may include a microphone, joystick, game pad, satellite dish, scanner, or the like. These and other input devices are connected to processing unit 132 through a user input interface 184 that is coupled to system bus 136, but may be connected by other interface and bus structures, such as a parallel port, game port, or a Universal Serial Bus (USB). A monitor 188 or other type of display device is also connected to system bus 136 via an interface, such as a video interface 190. In addition to the monitor 188, computers often include other peripheral output devices (not shown) such as a printer and speakers, which may be connected through an output peripheral interface (not shown).

The computer 130 may operate in a networked environment using logical connections to one or more remote computers, such as a remote computer 194. The remote computer 194 may be a personal computer, a server, a router, a network PC, a peer device or other common network node, and typically includes many or all of the elements described above relative to computer 130. The logical connections depicted in FIG. 5 include a local area network (LAN) 196 and a wide area network (WAN) 198, but may also include other networks. Such networking environments are commonplace in offices, enterprise-wide computer networks, intranets, and global computer networks (e.g., the Internet).

When used in a local area networking environment, computer 130 is connected to the LAN 196 through a network interface or adapter 186. When used in a wide area networking environment, computer 130 typically includes a modem 178 or other means for establishing communications over the WAN 198, such as the Internet. The modem 178, which may be internal or external, is connected to system bus 136 via the user input interface 184, or other appropriate mechanism. In a networked environment, program modules depicted relative to computer 130, or portions thereof, may be stored in a remote memory storage device (not shown). By way of example, and not limitation, FIG. 5 illustrates remote application programs 192 as residing on the memory device. It will be appreciated that the network connections shown are exemplary and other means of establishing a communications link between the computers may be used.

Generally, the data processors of computer 130 are programmed by means of instructions stored at different times in the various computer-readable storage media of the computer. Programs and operating systems are typically distributed, for example, on floppy disks or CD-ROMs. From there, they are installed or loaded into the secondary memory of a computer. At execution, they are loaded at least partially into the computer's primary electronic memory. The invention described herein includes these and other various types of computer-readable storage media when such media contain instructions or programs for implementing the steps described below in conjunction with a microprocessor or other data processor. The invention also includes the computer itself when programmed according to the methods and techniques described herein.

For purposes of illustration, programs and other executable program components, such as the operating system, are illustrated herein as discrete blocks. It is recognized, however, that such programs and components reside at various times in different storage components of the computer, and are executed by the data processor(s) of the computer.

Although described in connection with an exemplary computing system environment, including computer 130, the invention is operational with numerous other general purpose or special purpose computing system environments or configurations. The computing system environment is not intended to suggest any limitation as to the scope of use or functionality of the invention. Moreover, the computing system environment should not be interpreted as having any dependency or requirement relating to any one or combination of components illustrated in the exemplary operating environment. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, executed by one or more computers or other devices. Generally, program modules include, but are not limited to, routines, programs, objects, components, and data structures that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

In operation, computer 130 executes computer-executable instructions such as those illustrated in FIG. 3 to arrange the identifiers for the nodes to display one or more of the levels in the visual representation of the hierarchy on the display in one of a plurality of directions relative to a higher one of the levels. Computer 130 also executes computer-executable instructions to receive an activation request from a user to expand the visual representation of the hierarchy. The activation request includes at least one of the identifiers selected by the user via the user interface selection device. The selected identifier is associated with a node of a specific one of the levels. The request further includes an operative direction associated with the selected identifier. Computer 130 also executes computer-executable instructions to arrange the identifiers associated with the nodes in one of the levels lower than the specific one of the levels for display in the operative direction in the visual representation of the hierarchy on the display.

### Examples

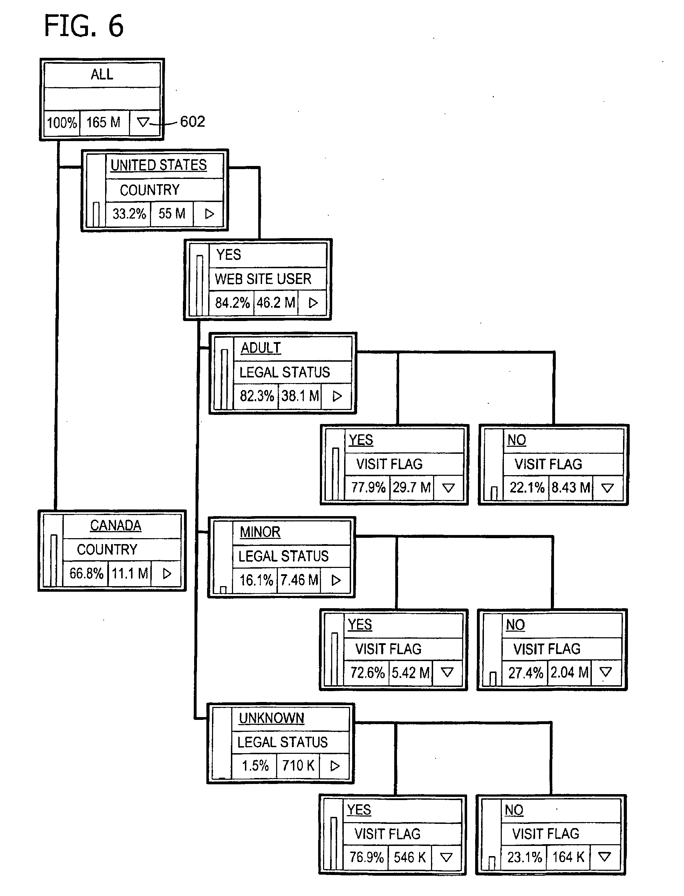

The following examples illustrate the invention. FIG. 6 is a screen shot of an exemplary embodiment of the invention illustrating a multi-directional hierarchy. FIG. 6 illustrates a "stair stepping" feature in which the display direction of nodes alternates between a vertical axis and a horizontal axis. Such a display allows the user to view more nodes on the display at any one time than with a hierarchy provided by existing systems. A pivot arrow in each node such as pivot arrow 602 indicates the display direction in which subsequent nodes will appear if expanded. In one embodiment, the stair stepping behavior is enabled by default. Alternating the display of data between vertical and horizontal directions conserves screen display area by changing the overall angle of hierarchy expansion. That is, the general direction of expansion changes from primarily down (e.g., traditional vertically-displayed hierarchies) to a forty-five degree angle equally vertical and equally horizontal. Such a change in expansion angle causes substantially more information to be displayed without scrolling.

Data in the exemplary hierarchy of FIG. 6 is organized according to dimension group, dimension, and level. A dimension is a hierarchy of levels that are the basis for constraining and grouping within queries. For example, a location dimension includes a hierarchy of dimension levels such as Country, State, DMA, City, and Zip code. For example, by using a right click menu to select a subject area followed by a dimension (e.g., age) and then by selecting a dimension level (e.g., age group), the user queries the database to display all users by their age group. After selecting a dimension level, the invention software displays the data using one or multiple nodes. Each node displays information about the dimension member of the selected dimension level. For example, 25-34 is a dimension member of the age group dimension level.

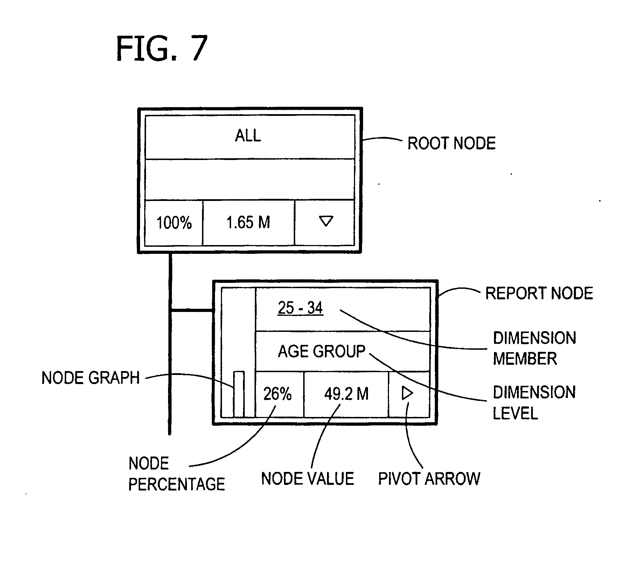

Referring next to FIG. 7, a screen shot illustrates a root node in the hierarchy and identifies the different sections of the exemplary nodal data associated with the root node. In this example, the root node represents all user data collected during a specific time interval. The node value of the root node equals the total number of users (e.g., 165 million). A dimension level represents the name of a group of related members in a dimension hierarchy. For example, AgeGroup and LegalStatus are dimension levels in an Age dimension. A dimension member is an item in a dimension level representing one or more occurrences of data. Members of the AgeGroup dimension level include 25-34 and 35-50. A member can be either unique or non-unique. For example, in a Client Settings subject area, the Browser dimension contains two dimension levels, Browser and BrowserVersion. Browser X represents a unique member of the Browser dimension level and 1.0 represents a non-unique member of the BrowserVersion dimension level. A node graph depicts a graphical representation of the data represented by the node. The default graph is a bar graph. In the example above, the bar graph represents 26% of the parent or root node. A nodal value is a data value associated with the node. In the above example, 42.9 million is the number of users that are in the 25-34 year old Age Group. A node percentage represents the percentage comparing a nodal value of a current node with a nodal value of a node in a higher level. A pivot arrow identifies the direction of levels expanded by subsequent queries. The user may select the arrow to specify the display direction. Additional information is provided by hovering a pointer over a report node via a user interface selection device. This displays a data summary for that node.

Software of the invention includes an option to manually or automatically group dimensions. The user selects a node (e.g., performs a right-click via a user interface selection device) to add the node to a specific dimension group. The invention software also automatically creates dimension groups (e.g., alphabetically by dimension group name). The invention software generates metadata describing the dimension groups. Dimensions groups may include, for example, "demographic information" or "client settings."

When introducing elements of the present invention or the embodiment(s) thereof, the articles "a," "an," "the," and "said" are intended to mean that there are one or more of the elements. The terms "comprising," "including," and "having" are intended to be inclusive and mean that there may be additional elements other than the listed elements.

In view of the above, it will be seen that the several objects of the invention are achieved and other advantageous results attained.

As various changes could be made in the above constructions, products, and methods without departing from the scope of the invention, it is intended that all matter contained in the above description and shown in the accompanying drawings shall be interpreted as illustrative and not in a limiting sense.

## Claims

1. A method of presenting data in a user interface for navigation by a user, said data being associated with a plurality of nodes and being stored in a memory area, said nodes being organized according to a hierarchy having a plurality of levels, each of said nodes being identified by an identifier associated therewith, said method comprising:
arranging the identifiers to display the nodes of one or more of the levels in a visual representation of the hierarchy, said identifiers being arranged to display one or more of the nodes of one level in a first direction relative to a higher level in the hierarchy and to display one or more of the nodes of at least one other level in a second direction relative to a higher level in the hierarchy, said first direction being different than said second direction; and
displaying to the user the visual representation of the hierarchy having the arranged identifiers for the nodes.

2. The method of claim 1, wherein the first direction is generally horizontal relative to the user interface and the second direction is generally vertical relative to the user interface.

3. The method of claim 1, wherein displaying the visual representation of the hierarchy comprises delivering, to the user for display, the visual representation of the hierarchy having the arranged identifiers for the nodes.

4. The method of claim 1, wherein arranging the identifiers comprises arranging the identifiers to display the nodes of one or more of the levels in a visual representation of the hierarchy on a computing device selected from a group consisting of a personal digital assistant, a cellular telephone, and a laptop computer.

5. The method of claim 1, wherein arranging the identifiers comprises arranging the identifiers to display the nodes of one or more of the levels in a visual representation of the hierarchy, said identifiers being arranged to display one or more of the nodes of one level in a substantially horizontal direction relative to a higher level in the hierarchy and to display one or more of the nodes of at least one other level in a substantially vertical direction relative to a higher level in the hierarchy.

6. The method of claim 1, further comprising expanding or collapsing the visual representation of the hierarchy in response to one or more requests from the user to expand or collapse, respectively, the visual representation of the hierarchy.

7. The method of claim 1, further comprising pivoting a display direction of one of the levels in the visual representation of the hierarchy in response to one or more requests from the user to pivot the display direction.

8. The method of claim 1, wherein arranging the identifiers comprises dynamically arranging the identifiers in response to user input to display the nodes of one or more of the levels in a visual representation of the hierarchy in accordance with the user input.

9. The method of claim 1, further comprising storing the arranged identifiers in a hypertext markup language document.

10. The method of claim 1, wherein each of the identifiers is represented by a rectangle with a first aspect ratio, said first aspect ratio corresponding to a second aspect ratio associated with a display area in the visual representation of the hierarchy.

11. The method of claim 1, wherein one or more computer-readable media have computer-executable instructions for performing the method of claim 1.

12. A data reporting system for presenting data in a user interface for navigation by a user, said data being associated with a plurality of nodes and being stored in a memory area, said nodes being organized according to a hierarchy having a plurality of levels, each of said nodes being identified by an identifier associated therewith, said system comprising:
means for arranging the identifiers to display the nodes of one or more of the levels in a visual representation of the hierarchy, said identifiers being arranged to display one or more of the nodes of one level in a first direction relative to a higher level in the hierarchy and to display one or more of the nodes of at least one other level in a second direction relative to a higher level in the hierarchy, said first direction being different than said second direction; and
means for displaying to the user the visual representation of the hierarchy having the arranged identifiers for each of the nodes.

13. The data reporting system of claim 12, further comprising means for receiving an activation request from a user to expand or pivot the visual representation of the hierarchy, said activation request corresponding to at least one of the identifiers selected by the user via the user interface selection device, said at least one of the identifiers being associated with a node of a specific one of the levels, said request further comprising an operative direction associated with said at least one of the identifiers.

14. The data reporting system of claim 13, further comprising means for arranging the identifiers to display the nodes of a lower level relative to the specific one of the levels in the visual representation of the hierarchy, said identifiers being arranged to display the nodes of the lower level in the operative direction relative to a higher level in the hierarchy to expand the visual representation of the hierarchy in response to the received activation request.

15. The data reporting system of claim 13, further comprising means for arranging the identifiers to display the nodes of the specific one of the levels in the visual representation of the hierarchy in the operative direction relative to a higher level in the hierarchy to pivot the visual representation of the hierarchy in response to the received activation request.

16. The data reporting system of claim 12, further comprising:
means for receiving an activation request from a user to collapse the visual representation of the hierarchy, said activation request corresponding to at least one of the identifiers selected by the user via the user interface selection device, said at least one of the identifiers being associated with a node of a specific one of the levels; and
means for arranging the identifiers to collapse the specific one of the levels in the visual representation of the hierarchy in response to the received activation request.

17. The data reporting system of claim 12, wherein the first direction is generally horizontal relative to the user interface and the second direction is generally vertical relative to the user interface.

18. The data reporting system of claim 12, wherein each of the levels is displayed in either a substantially horizontal or a substantially vertical direction relative to a higher one of the levels in the hierarchy.

19. The data reporting system of claim 12, wherein the means for arranging the identifiers comprises a software component for automatically scaling a size of each of the arranged identifiers for each of the nodes in the visual representation of the hierarchy to fit a display area of the user interface without scrolling.

20. The data reporting system of claim 12, wherein the memory area comprises an on-line analytical processing database.
